# EUROPÄISCHE PATENTSCHRIFT

(11) **EP 3 073 139 B1**
(45) Veröffentlichungstag und Bekanntmachung des Hinweises auf die Patenterteilung: **13.12.2017**
(21) Anmeldenummer: 16157247.4
(22) Anmeldetag: 25.02.2016
(51) Int. Cl.: F16D 1/09, B60T 1/087

(54) **KUPPLUNGSEINRICHTUNG FÜR EINEN HYDRODYNAMISCHEN RETARDER**
COUPLING DEVICE FOR A HYDRODYNAMIC RETARDER
DISPOSITIF DE COUPLAGE POUR UN RETARDATEUR HYDRODYNAMIQUE

(30) Priorität: 25.03.2015 DE 102015205417
(43) Veröffentlichungstag der Anmeldung: 28.09.2016
(73) Patentinhaber: ZF Friedrichshafen AG, 88046 Friedrichshafen (DE)
(72) Erfinder: Wölfle, Bernd, 88074 Meckenbeuren (DE)

(56) Entgegenhaltungen:
- EP-A2- 0 287 099
- DE-A1- 10 321 279
- DE-A1-102007 047 889
- JP-A- 2001 295 870

## Beschreibung

Die Erfindung betrifft eine Kupplungseinrichtung für einen hydrodynamischen Retarder zur Zuschaltung einer Hydraulikpumpe nach dem Oberbegriff von Anspruch 1 und einen hydrodynamischen Retarder mit einer solchen Kupplungseinrichtung sowie einen Antriebsstrang mit einem solchen Retarder.

Neben den Betriebsbremsen eines Fahrzeugs, insbesondere eines Nutzfahrzeugs, die im Regelfall einem Verschleiß unterliegende Reibungsbremsen sind, werden zusätzliche Verzögerungseinrichtungen gefordert und von den Fahrzeugherstellern angeboten. Derartige verschleißfreie zusätzliche Verzögerungseinrichtungen in Form von Retardern und Motorbremsen können dazu verwendet werden, die Fahrzeuggeschwindigkeit zu reduzieren und insbesondere im Gefälle die Geschwindigkeit auch konstant zu halten. So werden Retarder bei Nutzfahrzeugen vor allem eingesetzt, um die beispielsweise bei Bremsung aus hoher Fahrgeschwindigkeit anfallende kinetische Bremsenergie aufzunehmen und in Wärme umzusetzen. Sie sind aber auch für geforderte Dauerbremsleistungen gut geeignet, beispielsweise im Gefälle bei lang andauernder Bergabfahrt.

Zu den Retardern werden sowohl zusätzlich am Getriebe angeordnete hydrodynamische, hydrostatische oder elektrodynamische Bremseinrichtungen gezählt, sowie auch Systeme, die in Form eines "Intarders" innerhalb des Getriebegehäuses vorgesehen sind. Bei hydrodynamischen Retardern wird die Strömungsenergie einer Flüssigkeit zum Bremsen benutzt. Ein hydrodynamischer Retarder weist dazu einen sich im Leistungsfluss befindlichen Rotor und einen mit dem Retardergehäuse fest verbundenen Stator auf. Rotor und Stator weisen eine Beschaufelung auf, die gemeinsam einen torusförmigen Arbeitsraum bildet. Beim Betätigen des Retarders wird eine der gewünschten Bremsleistung entsprechende Flüssigkeitsmenge, vorzugsweise Öl oder Wasser, in den Arbeitsraum eingebracht, wobei der drehende Rotor die Flüssigkeit mitnimmt und an den Stator weiterleitet, wo sich die Flüssigkeit abstützt, wodurch eine Bremswirkung auf die Rotorwelle erzeugt wird.

Je nach Anordnung im Triebstrang werden Retarder in Primärretarder und Sekundärretarder eingeteilt, wobei Primärretarder motorseitig und Sekundärretarder getriebeseitig angeordnet sind. Primärretarder arbeiten in Abhängigkeit von der Motordrehzahl, während Sekundärretarder in Abhängigkeit von der Fahrzeuggeschwindigkeit arbeiten.
Aus der DE 102007047889 A1 ist ein hydrodynamischer Retarder in einer Anordnung bekannt geworden, die einen Rotor zeigt, dessen Lagerung im Stator des Retarders vorgesehen ist. Dies ergibt eine günstige Gestaltung des Bauraums des Retarders. Aus der JP2001-295870 is ein hydrodynamischer Retarder mit einer Kupplung, die in einem an einem Rotor des Retarders befestigten zylindrischen Gehäuse angeordnet ist, bekannt geworden. Der Retarder weist eine durchgehende Rotorwelle auf.

Bekannt sind hydrodynamische Retarder, welche einen Kreislauf zur Steuerung des Retarders aufweisen, der mit einer Hydraulikpumpe gespeist wird. Die Pumpe ist mechanisch mit dem Retarder gekoppelt und dreht mit der entsprechenden Retarderdrehzahl, wodurch Verluste entstehen können. Im Nicht-Brems-Betrieb wird die Pumpe nicht dauernd benötigt, nur beispielsweise zum Befüllen eines evtl. vorhandenen Speichers. Die restliche Zeit kann sie abgeschaltet werden.
Aus der DE 10331279 A1 ist hierzu bekannt geworden, einen hydrodynamischen Retarder mit einer Schaltkupplung zu versehen, die es ermöglicht, die Hydraulikpumpe lösbar mit der Rotorwelle zu verbinden.
Der vorliegenden Erfindung liegt die Aufgabe zugrunde, einen hydrodynamischen Retarder mit einer Kupplungseinrichtung zu versehen, die platzsparend angeordnet ist.
Die Aufgabe wird nach der Erfindung gelöst durch eine Kupplungseinrichtung für einen hydrodynamischen Retarder mit den Merkmalen des Anspruchs 1 und durch einen entsprechend ausgestalteten hydrodynamischen Retarder. Ausgestaltungen sind Gegenstand von Unteransprüchen.
Bei einem hydrodynamischen Retarder ist ein Arbeitsraum vorgesehen, der zwischen einem feststehenden Stator und einem drehfest mit einer Rotorwelle verbundenen Rotor gebildet wird. Ein zur Entfaltung der Wirkung des hydrodynamischen Retarders erforderliches Arbeitsfluid, vorzugsweise Öl oder Wasser bzw. ein Wassergemisch, wird bedarfsgerecht in den Arbeitsraum eingebracht. Dazu ist eine Hydraulikpumpe vorgesehen, die über eine Kupplungseinrichtung mit der Rotorwelle verbunden ist und das Arbeitsfluid in den Arbeitsraum fördert. Erfindungsgemäß ist diese Kupplungseinrichtung in einer nahezu bauraumneutralen Ausbildung radial innerhalb der Rotorwelle angeordnet. Durch die Anordnung der Kupplungseinrichtung innerhalb der Rotorwelle wird erreicht, dass auf sehr kleinem Raum eine effektive Zuschaltung der Hydraulikpumpe erreicht werden kann und der hydrodynamische Retarder noch kompakter gebaut werden kann. Dadurch, dass die Kupplungseinrichtung radial kompakt innerhalb der Rotorwelle sitzt und dabei nur einen geringen Durchmesser aufweist, werden auch nur geringe Trägheitseinflüsse durch die Kupplungseinrichtung generiert.

Dabei ist vorteilhafterweise die Kupplungseinrichtung axial zwischen einer die Rotorwelle antreibenden Verzahnung, beispielsweise einer von der Getriebeabtriebswelle angetriebenen Hochtreiberstufe, und der Hydraulikpumpe angeordnet. Hierdurch lässt sich der axial verfügbare Platz, der geschaffen wird durch die Verzahnung der Hochtreiberstufe und den axialen Bereich des Retarders, den der Arbeitsraum selbst einnimmt, sinnvoll nutzen, um die Kupplungseinrichtung unterzubringen. Die Hydraulikpumpe kann sich dadurch nahezu unmittelbar an den durch Rotor und Stator gebildeten Bereich anschließen und dadurch axial enger an den Retarder angebunden werden. Die gesamte Retarderanordnung baut dadurch axial kürzer. Ein Antriebsstrang, der den Retarder einschließt, kann dadurch verkürzt werden.

Um die Kupplungseinrichtung radial kompakt auszubilden, wird in einer Ausgestaltung vorgeschlagen, dass die Kupplungseinrichtung eine Konus-Kupplung aufweist. Durch die Form der Konus-Kupplung kann trotz nur begrenzter Ausdehnung in radialer Richtung eine möglichst große Wirkfläche in der Kupplung erzeugt werden. Das Prinzip der reibenden Konusflächen ist beispielsweise auch vielfach aus dem Gebiet der Synchronisierungen bekannt und erfüllt dort zuverlässig den bremsenden und drehzahlangleichenden Effekt auf die beteiligten Bauteile. Besonders vorteilhaft kann eine als Doppelkonus ausgebildete Konus-Kupplung verwendet werden, deren Reibfläche durch den Doppelkonus deutlich vergrößert wird und dadurch ein besseres Bremsverhalten hervorruft, ohne die baulichen Abmessungen zu sehr zu vergrößern. Um die Hydraulikpumpe mit der Kupplungseinrichtung zu verbinden, hat es sich als vorteilhaft herausgestellt, wenn die Hydraulikpumpe über eine innerhalb der Rotorwelle angeordnete Antriebswelle mit der Kupplungseinrichtung verbunden wird. Dadurch lässt sich eine sichere Übertragung der Antriebsleistung auf die Hydraulikpumpe erzeugen, ohne die kompakte bauliche Anordnung des Retarders zu verschlechtern. Die Antriebswelle kann innerhalb der hohlgebohrten Rotorwelle gelagert werden.

Da die Kupplungseinrichtung radial innerhalb der Rotorwelle vorgesehen ist, muss eine Öffnung in der Rotorwelle vorgesehen sein, in die die Kupplungseinrichtung eingebracht werden kann und die leicht zugänglich ausgebildet ist. Hierfür ist in einer vorteilhaften Ausbildung der Erfindung die Kupplungseinrichtung in einer Öffnung an einem Ende der Rotorwelle vorgesehen, die durch einen lösbaren Deckel verschlossen ist. Dadurch ist es einerseits einfach möglich, die Kupplungseinrichtung in die Rotorwelle einzufügen und gegebenenfalls einer Wartung oder einer Reparatur zu unterziehen, und andererseits werden die Elemente der Kupplungseinrichtung vor Einflüssen wie beispielsweise Verschmutzungen aus dem Getriebe oder den sonstigen Retarderbauteilen geschont. Darüber hinaus dient der Deckel auch als eine Dichtungseinrichtung des Betätigungsraumes der Kupplungseinrichtung, in den das Betätigungsfluid der Kupplungseinrichtung eingebracht wird. Hierzu kann vorteilhaft vorgesehen sein, dass der lösbare Deckel dichtend mit einem Adapter zusammenwirkt. Der Adapter kann dabei eine getrennte Übergabe von Betätigungsfluid und Schmiermittel für die Kupplungseinrichtung gewährleisten. Dies ist insbesondere deshalb erforderlich, da einerseits die Schmiermittelversorgung zentral im Bereich der Drehachse der Rotorwelle erfolgt und somit auch bei rotierender Welle eine sichere Übertragung zwischen den Bauteilen erfolgen kann. Andererseits erfolgt jedoch die Zuführung des Betätigungsfluids durch einen Anschluss, der radial außerhalb der Drehachse liegt und dennoch eine dichte Übertragung auf die Kupplungseinrichtung erfolgen muss. Dies wird durch eine entsprechende Übergabeanordnung zwischen dem rotierenden Deckel und dem nicht rotierenden Adapter erreicht.

Zur Ausbildung der Kupplungseinrichtung mit konusförmigen Reibflächen weist die innerhalb der Rotorwelle angeordnete Antriebswelle der Hydraulikpumpe vorzugsweise einen drehfest angeordneten Mitnehmer auf. Dieser Mitnehmer weist wenigstens eine konusförmige und radial außenliegende erste Oberfläche auf. Mit dieser außenliegenden Oberfläche tritt beim Schließen der Kupplungseinrichtung eine konusförmigen und radial innenliegenden Oberfläche der Rotorwelle in Kontakt und wirkt mit dieser zusammen. Dazu ist diese innenliegende Oberfläche vorteilhafterweise direkt in das Material der Rotorwelle eingearbeitet, um zusätzliche Bauteile zu vermeiden und Bauraum zu sparen.

Zur Betätigung der Kupplungseinrichtung könnte ein durch das Betätigungsfluid verschobener Kolben unmittelbar auf den an der Antriebswelle zur Hydraulikpumpe angeordneten Mitnehmer einwirken und dessen außenliegende Oberfläche gegen die innenliegende Oberfläche in der Rotorwelle andrücken. Vorteilhafterweise weist jedoch die Kupplungseinrichtung einen Kolben auf, der in Teilen seiner Oberfläche eine konusförmige Ausgestaltung aufweist, wobei zur Bildung eines Doppelkonusses die konusförmig ausgestaltete Oberfläche des Kolbens radial außenliegend ist und ihrerseits mit einer konusförmigen und radial innenliegenden zweiten Oberfläche des Mitnehmers zusammenwirkt. Dadurch kann am Kolben selbst eine erste Reibfläche gebildet werden und bei geringer axialer Ausdehnung kann der Kolben mit der einen innenliegenden Reibfläche des Mitnehmers an der Antriebswelle zur Hydraulikpumpe zusammenwirken, während die außenliegende Reibfläche dieses Mitnehmers durch die Bewegung des Kolbens gegen die Reibfläche an der Rotorwelle gedrückt wird und mit dieser zusammenwirken kann.

Damit die bei Betätigung der Kupplungseinrichtung miteinander in Kontakt tretenden und zusammenwirkenden Reibflächen bei Nichtnutzung der Kupplungseinrichtung schnell voneinander getrennt werden können und getrennt gehalten werden können, um möglichst geringe Verluste durch ungewollte Reibung zu vermeiden, sind in der Kupplungseinrichtung vorteilhafterweise elastische Mittel, wie beispielsweise spiralförmige Federelemente, vorgesehen, die ein Lösen der miteinander in Kontakt getretenen Elementen der Kupplungseinrichtung unterstützen. Wenn kein Druck mehr auf den Kolben ausgeübt wird, drücken vorzugsweise mehrere in der Rotorwelle kreisförmig um die Drehachse angeordnete Federelemente den Kolben weg von der Rotorwelle, während vorzugsweise ein zentral in der Rotorwelle vorgesehenes, spiralförmiges Federelement den an der Antriebswelle der Hydraulikpumpe angeordneten Mitnehmer von der Rotorwelle wegdrückt. Hierdurch lässt sich die Reibleistung zwischen den konusförmigen Reibflächen bei geöffneter Kupplungseinrichtung auf ein Minimum reduzieren.

Alle konusförmigen Reibflächen sind vorteilhafterweise mit einem Reibbelag oder einer Reibbeschichtung versehen, wodurch dir bremsende Wirkung der miteinander in Kontakt kommenden Reibflächen begünstigt wird. Ein solcher Reibbelag oder eine solche Reibbeschichtung kann aus Molybdän oder aus Sintermaterial bestehen oder ist vorzugsweise aus Carbon gebildet.

Schließlich wird noch in einer weiteren vorteilhaften Ausgestaltung der Kupplungseinrichtung vorgeschlagen, dass zwischen der Kupplungseinrichtung und einer Schmiermittel für die Kupplungseinrichtung liefernden Einrichtung eine Schmiermittelübergabestelle vorgesehen ist, die den Übertritt von Schmiermittel von der Schmiermittel liefernden Einrichtung zur Kupplungseinrichtung ermöglicht, aber den Übertritt von der Kupplungseinrichtung zur Schmiermittel liefernden Einrichtung sperrt. Als Schmiermittel liefernde Einrichtung kommt hier beispielsweise das Getriebe in Frage, das zwar Öl zur Schmierung des Retarders zur Verfügung stellt, aber nicht durch aus dem Retarder zurücklaufendes Retarderöl beeinträchtigt werden soll. Hierzu ist die Schmiermittelübergabestelle in Form eines Rückschlagventils ausgebildet, das den Ölfluss nur in eine Richtung zulässt.

Die Erfindung umfasst auch einen hydrodynamischen Retarder mit einer erfindungsgemäßen Kupplungseinrichtung, die radial innerhalb der Rotorwelle des Retarders angeordnet ist, sowie einen Antriebsstrang mit einem derartigen Retarder.

Die Erfindung wird anhand einer Zeichnung näher erläutert.

Es zeigen:
- Fig. 1: einen Schnitt durch die erfindungsgemäße Kupplungseinrichtung
- Fig. 2: einen Schnitt eines Details zur Betätigung der Kupplungseinrichtung

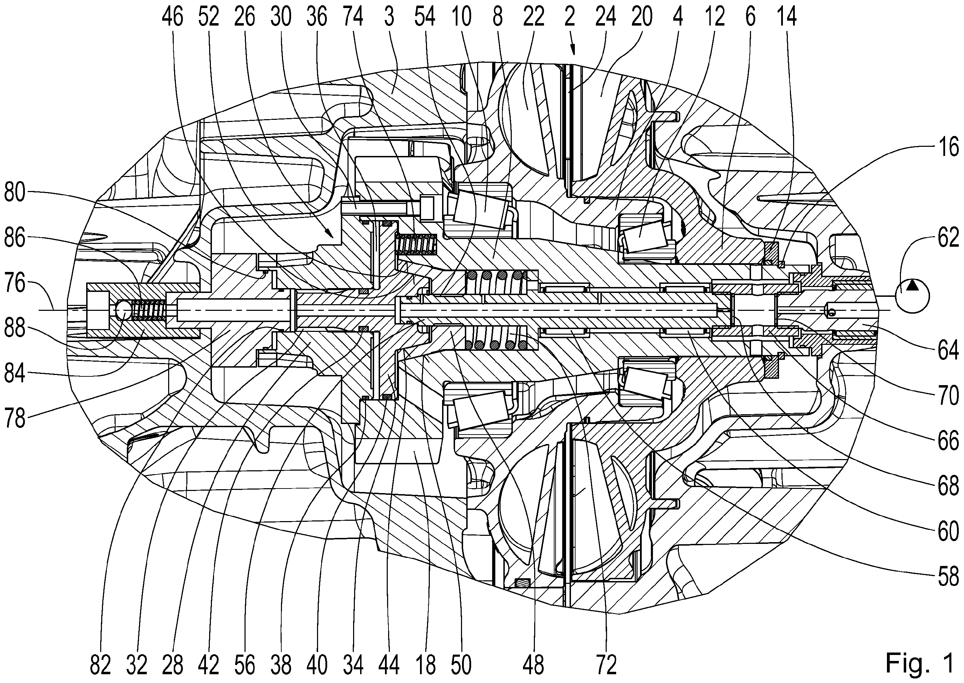

In der Fig. 1 ist in einer Schnittdarstellung ein hydrodynamischer Retarder 2 gezeigt, der einen fest im Getriebegehäuse 3 vorgesehenen Stator 4 und einen Rotor 6 umfasst, der auf einer Rotorwelle 8 drehfest befestigt ist. Die Rotorwelle 8 ist innerhalb des Stators 4 über zwei Lager 10 und 12 drehbar gelagert und der Rotor 6 ist auf der Rotorwelle 8 über eine Stützscheibe 14 und einen Sicherungsring 16 axial gesichert. Die Rotorwelle 8 weist eine Verzahnung 18 auf, die als Teil einer hier nicht näher dargestellten Hochtreiberstufe die Rotorwelle 8 antreibt. Der Rotor 6 weist eine Rotorbeschaufelung 20 auf, die zusammen mit einer Statorbeschaufelung 22 einen Arbeitsraum 24 bildet.

Radial innerhalb der Rotorwelle 8 ist eine Kupplungseinrichtung 26 vorgesehen, die an einem Ende der Rotorwelle 8, hier in der Zeichnung dem linken Ende der Rotorwelle 8 angeordnet ist. Ein Deckel 28 schließt die Kupplungseinrichtung 26 nach außen ab und ist über eine Verschraubung 30 an der Rotorwelle 8 befestigt. Über eine Mitnahmeverzahnung 32 stützt sich ein Kolben 34 der Kupplungseinrichtung 26 im Deckel 28 ab. Zwischen dem Deckel 28 und dem Kolben 34 wird ein Betätigungsraum 36 gebildet, in den ein Betätigungsfluid zur Aktivierung der Kupplungseinrichtung 26 eingebracht werden kann. Der Betätigungsraum 36 ist durch Dichtmittel 38, 40 und 42 gegenüber der Rotorwelle 8 und der Umgebung abgedichtet.

Auf der dem Betätigungsraum 36 gegenüberliegenden Seite des Kolbens 34 ist an dem Kolben 34 eine radial außenliegende und konusförmige Oberfläche 44 vorgesehen. Diese Oberfläche 44 kommt in Kontakt mit einer radial innenliegenden und ebenfalls konusförmigen Oberfläche 46 an einem Mitnehmer 48. Der Mitnehmer 48 weist zudem eine radial außenliegende und konusförmige Oberfläche 50 auf, die ihrerseits mit einer radial innenliegenden und konusförmigen Oberfläche 52 zusammenwirkt. Diese radial innenliegende und konusförmige Oberfläche 52 ist unmittelbar in die Rotorwelle 8 eingearbeitet. Die konusförmigen Oberflächen 44, 46, 50 und 52 bilden Reibflächen einer Doppelkonus-Kupplung, die jeweils paarweise aneinander reiben und dadurch Relativdrehzahlen zwischen den jeweiligen, die Oberflächen aufweisenden Bauteilen reduzieren und schließlich mit gleicher Drehzahl rotieren und die Rotorwelle 8 und den Mitnehmer 48 kuppeln.

Mit dem Mitnehmer 48 über eine Mitnahmeverzahnung 54 drehfest verbunden ist eine Antriebswelle 56, die einerseits im Kolben 34 dichtend gelagert ist und andererseits über zwei weitere Lagerungen 58 und 60 radial innerhalb der Rotorwelle 8 gelagert wird. Die Antriebswelle 56 dient dem Antrieb einer Hydraulikpumpe 62, deren Pumpenwelle 64 über eine Hülse 66 drehfest mit der Antriebswelle 56 verbunden ist. Über Sicherungsringe 68 und 70 innerhalb der Hülse 66 kann eine gewünschte Distanzierung der Bauteile zueinander erreicht werden. Die Antriebswelle 56 ist hohlgebohrt, so dass rotierende Bauteile und aneinander reibende Bauteile mit Schmiermittel aus Schmiermittel führenden Bereichen in dem Getriebegehäuse versorgt werden können.

Innerhalb der Rotorwelle 8 ist ein erstes Federelement 72 platziert, das sich an der Rotorwelle 8 abstützt und den Mitnehmer 48 mit seiner radial außenliegenden Oberfläche 50 von der radial innenliegenden Oberfläche 52 der Rotorwelle 8 wegdrückt, um ein Auseinandergehen der beiden Oberflächen 50 und 52 zu unterstützten. Ein weiteres Federelement 74 ist zusammen mit mehreren gleichartigen Federelementen kreisförmig um eine Rotationsachse 76 in der Rotorwelle 8 vorgesehen, um den Kolben 34 mit seiner radial außenliegenden Oberfläche 44 von der radial innenliegenden Oberfläche 46 des Mitnehmers 48 wegzudrücken und damit ein Auseinandergehen der beiden Oberflächen 44 und 46 zu unterstützen. Die Federelemente 72 und 74 beschleunigen und vereinfachen das Auseinandergehen der konusförmigen Reibflächen der Kupplungseinrichtung 26 in den Zeiträumen, in denen die Kupplungseinrichtung 26 nicht betätigt wird.

Wie bereits weiter oben dargestellt, ist zwischen dem Kolben 34 und dem Deckel 28 ein Betätigungsraum 36 für die Kupplungseinrichtung 26 gebildet. Zur Betätigung der Kupplungseinrichtung 26 muss Betätigungsfluid in diesen Betätigungsraum 36 gefördert werden. Als Betätigungsfluid kommt insbesondere Hydrauliköl oder Druckluft in Betracht. Der durch die Verschraubung 30 mit der Rotorwelle 8 verbundene Deckel 28 rotiert mit der Rotorwelle 8. Es ist ein Adapter 78 vorgesehen, der mit dem Deckel 28 zusammenwirkt und durch Dichtmittel 80 und 82 gegenüber dem Deckel 28 abgedichtet ist. Im Gegensatz zum Deckel 28 ist der Adapter feststehend und rotiert nicht. Der Adapter 78 steht mit einem Ventilelement 84 in Verbindung, das in einen Ölraum des Getriebegehäuses 3 hineinragt. Eine Ventilfeder 86 drückt eine Kugel 88 auf einen Ventilsitz. Das Ventilelement 84 verhindert das Eindringen von Öl aus dem Retarder in den Ölraum des Getriebegehäuses 3, lässt aber den Zufluss von Schmiermittel aus dem Ölraum zum Retarder 2 zu. Das Ventilelement 84 bildet eine Schmiermittelübergabestelle zwischen der Kupplungseinrichtung 26 und dem Ölraum des Getriebegehäuses 3.

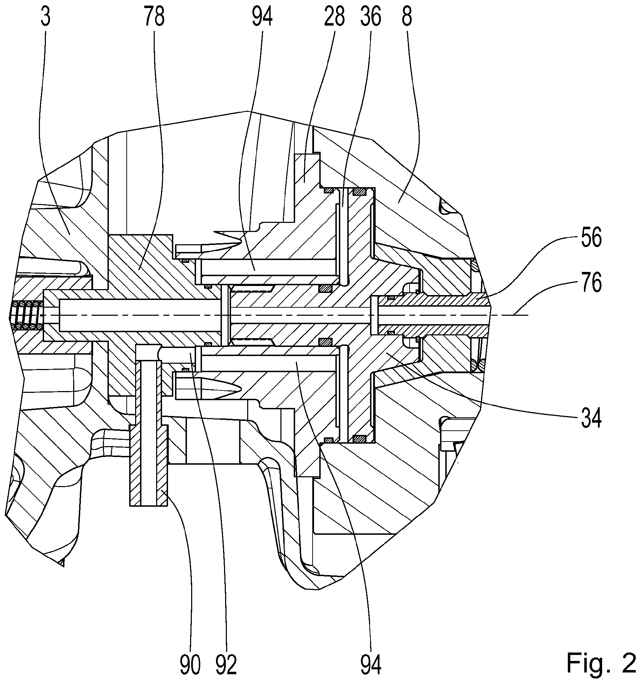

In der Fig. 2 ist die Zufuhrmöglichkeit von Betätigungsfluid in den Betätigungsraum 36 weiter beschrieben. Über ein Anschlussrohr 90 gelangt das Betätigungsfluid in den Adapter 78, das durch eine radial außerhalb der Rotationsache 76 liegende Öffnung 92 den Adapter 78 in Richtung des Deckels 28 verlässt. In dem Deckel 28 sind mehrere kreisförmig um die Rotationsachse 76 verteilte Durchtrittsöffnungen 94 vorgesehen, durch die das Betätigungsfluid vom Adapter 78 in den Betätigungsraum 36 gelangen kann. Im Zentrum des Adapters 78 rund um die Rotationsachse 76 kann Schmiermittel den Adapter zwischen dem Ventilelement 84 einerseits und dem Kolben 34 andererseits durchströmen. Schmiermittel und Betätigungsfluid kommen nicht miteinander in Kontakt.

Beim Betätigen der Kupplungseinrichtung 26 wird Betätigungsfluid durch das Anschlussrohr 90 zunächst in den Adapter 78 und dann weiter durch den Deckel 28 in den Betätigungsraum 36 gefördert. Dort drückt das Betätigungsfluid auf den Kolben 34, wodurch die reibenden Oberflächen 44, 46, 50 und 52 miteinander in Kontakt geraten und eine Verbindung zwischen der angetriebenen Rotorwelle 8 und der anzutreibenden Antriebswelle 56 hergestellt wird. Über die Antriebswelle 56 wird die Hydraulikpumpe 62 angetrieben und fördert Arbeitsfluid in den Arbeitsraum 23 des hydrodynamischen Retarders 2.

### Bezugszeichen

- 2: Retarder
- 3: Getriebegehäuse
- 4: Stator
- 6: Rotor
- 8: Rotorwelle
- 10: Lager
- 12: Lager
- 14: Stützscheibe
- 16: Sicherungsring
- 18: Verzahnung
- 20: Rotorbeschaufelung
- 22: Statorbeschaufelung
- 24: Arbeitsraum
- 26: Kupplungseinrichtung
- 28: Deckel
- 30: Verschraubung
- 32: Mitnahmeverzahnung
- 34: Kolben
- 36: Betätigungsraum
- 38: Dichtmittel
- 40: Dichtmittel
- 42: Dichtmittel
- 44: Oberfläche
- 46: Oberfläche
- 48: Mitnehmer
- 50: Oberfläche
- 52: Oberfläche
- 54: Mitnahmeverzahnung
- 56: Antriebswelle
- 58: Lagerung
- 60: Lagerung
- 62: Hydraulikpumpe
- 64: Pumpenwelle
- 66: Hülse
- 68: Sicherungsring
- 70: Sicherungsring
- 72: Federelement
- 74: Federelement
- 76: Rotationsachse
- 78: Adapter
- 80: Dichtmittel
- 82: Dichtmittel
- 84: Ventilelement
- 86: Ventilfeder
- 88: Kugel
- 90: Anschlussrohr
- 92: Öffnung
- 94: Durchtrittsöffnung

## Patentansprüche

1. Kupplungseinrichtung (26) für einen hydrodynamischen Retarder (2) zur Verbindung einer Rotorwelle (8) des hydrodynamischen Retarders (2) mit einer Hydraulikpumpe (62), die Arbeitsfluid in einen von einem drehfest mit der Rotorwelle (8) verbundenen Rotor (6) gemeinsam mit einem Stator (4) gebildeten Arbeitsraum (24) fördert, **dadurch gekennzeichnet, dass** die Kupplungseinrichtung (26) radial innerhalb der Rotorwelle (8) angeordnet ist.

2. Kupplungseinrichtung (26) nach Anspruch 1, **dadurch gekennzeichnet, dass** die Kupplungseinrichtung (26) axial zwischen einer die Rotorwelle (8) antreibenden Verzahnung (18) und der Hydraulikpumpe (62) angeordnet ist.

3. Kupplungseinrichtung (26) nach Anspruch 1, **dadurch gekennzeichnet, dass** die Kupplungseinrichtung (26) eine Konus-Kupplung aufweist.

4. Kupplungseinrichtung (26) nach Anspruch 3, **dadurch gekennzeichnet, dass** die Konus-Kupplung eines Doppelkonus aufweist.

5. Kupplungseinrichtung nach einem der Ansprüche 3 oder 4, **dadurch gekennzeichnet, dass** die Konus-Kupplung einen Reibbelag bzw. eine Reibbeschichtung aufweist, die insbesondere aus Carbon gebildet ist.

6. Kupplungseinrichtung (26) nach Anspruch 1, **dadurch gekennzeichnet, dass** die Hydraulikpumpe (62) über eine innerhalb der Rotorwelle (8) angeordnete Antriebswelle (56) mit der Kupplungseinrichtung (26) verbunden ist.

7. Kupplungseinrichtung (26) nach Anspruch 1, **dadurch gekennzeichnet, dass** die Kupplungseinrichtung (26) in einer Öffnung an einem Ende der Rotorwelle (8) vorgesehen ist, die durch einen lösbaren Deckel (28) verschlossen ist.

8. Kupplungseinrichtung (26) nach Anspruch 7, **dadurch gekennzeichnet, dass** der lösbare Deckel (28) dichtend mit einem Adapter (78) zusammenwirkt zur getrennten Übergabe von Betätigungsfluid und Schmiermittel für die Kupplungseinrichtung (26).

9. Kupplungseinrichtung (26) nach Anspruch 6, **dadurch gekennzeichnet, dass** die innerhalb der Rotorwelle (8) angeordnete Antriebswelle (56) einen drehfest angeordneten Mitnehmer (48) aufweist, der wenigstens eine konusförmige und radial außenliegende erste Oberfläche (50) aufweist, die mit einer konusförmigen und radial innenliegenden Oberfläche (52) der Rotorwelle (8) zusammenwirkt.

10. Kupplungseinrichtung (26) nach Anspruch 1, **dadurch gekennzeichnet, dass** die Kupplungseinrichtung (26) einen Kolben (34) aufweist, der in Teilen seiner Oberfläche (44) eine konusförmige Ausgestaltung aufweist.

11. Kupplungseinrichtung (26) nach Anspruch 10, **dadurch gekennzeichnet, dass** die konusförmig ausgestaltete Oberfläche (44) des Kolbens (34) radial außenliegend ist und mit einer konusförmigen und radial innenliegenden zweiten Oberfläche (46) des Mitnehmers (48) zusammenwirkt.

12. Kupplungseinrichtung (26) nach Anspruch 1, **dadurch gekennzeichnet, dass** elastische Mittel (72, 74) vorgesehen sind, die ein Lösen von miteinander in Kontakt tretenden Elementen (44, 46, 50, 52) der Kupplungseinrichtung (26) unterstützen.

13. Kupplungseinrichtung (26) nach Anspruch 1, **dadurch gekennzeichnet, dass** zwischen der Kupplungseinrichtung (26) und einer Schmiermittel für die Kupplungseinrichtung (26) liefernden Einrichtung eine Schmiermittelübergabestelle (84) vorgesehen ist, die den Übertritt von Schmiermittel von der Schmiermittel liefernden Einrichtung zur Kupplungseinrichtung (26) ermöglicht und den Übertritt von der Kupplungseinrichtung (26) zur Schmiermittel liefernden Einrichtung sperrt.

14. Hydrodynamischer Retarder (2) mit einem Stator (4) und einem drehfest mit einer Rotorwelle (8) verbundenen Rotor (6), der mit dem Stator (4) einen gemeinsamen Arbeitsraum (24) bildet, und mit einer Kupplungseinrichtung (26) zur Verbindung der Rotorwelle (8) mit einer ein Arbeitsfluid in den Arbeitsraum (24) fördernden Hydraulikpumpe (62), **dadurch gekennzeichnet, dass** die Kupplungseinrichtung (26) radial innerhalb der Rotorwelle (8) angeordnet ist.

15. Antriebsstrang mit einem hydrodynamischen Retarder (2) mit den Merkmalen des Anspruchs 14.

## Claims

1. Coupling device (26) for a hydrodynamic retarder (2) for connecting a rotor shaft (8) of the hydrodynamic retarder (2) to a hydraulic pump (62) which delivers operating fluid into an operating space (24) which is formed by a rotor (6) together with a stator (4), which rotor (6) is connected fixedly to the rotor shaft (8) so as to rotate with it, **characterized in that** the coupling device (26) is arranged radially within the rotor shaft (8).

2. Coupling device (26) according to Claim 1, **characterized in that** the coupling device (26) is arranged axially between a toothing system (18), which drives the rotor shaft (8), and the hydraulic pump (62).

3. Coupling device (26) according to Claim 1, **characterized in that** the coupling device (26) has a cone coupling.

4. Coupling device (26) according to Claim 3, **characterized in that** the cone coupling has a double cone.

5. Coupling device according to either of Claims 3 and 4, **characterized in that** the cone coupling has a friction lining or a friction coating which is formed, in particular, from carbon.

6. Coupling device (26) according to Claim 1, **characterized in that** the hydraulic pump (62) is connected to the coupling device (26) via a drive shaft (56) which is arranged within the rotor shaft (8).

7. Coupling device (26) according to Claim 1, **characterized in that** the coupling device (26) is provided in an opening at an end of the rotor shaft (8) which is closed by way of a releasable cover (28).

8. Coupling device (26) according to Claim 7, **characterized in that** the releasable cover (28) interacts sealingly with an adapter (78) for the separate transfer of actuating fluid and lubricant for the coupling device (26).

9. Coupling device (26) according to Claim 6, **characterized in that** the drive shaft (56) which is arranged within the rotor shaft (8) has a driver (48) which is arranged in a rotationally locked manner and has at least one conical and radially outer first surface (50) which interacts with a conical and radially inner surface (52) of the rotor shaft (8).

10. Coupling device (26) according to Claim 1, **characterized in that** the coupling device (26) has a piston (34) which has a conical configuration in parts of its surface (44).

11. Coupling device (26) according to Claim 10, **characterized in that** the conically configured surface (44) of the piston (34) lies radially on the outside and interacts with a conical and radially inner second surface (46) of the driver (48).

12. Coupling device (26) according to Claim 1, **characterized in that** elastic means (72, 74) are provided which assist a release of elements (44, 46, 50, 52) of the coupling device (26) which have passed into contact with one another.

13. Coupling device (26) according to Claim 1, **characterized in that** a lubricant transfer point (84) is provided between the coupling device (26) and a device which delivers lubricant for the coupling device (26), which lubricant transfer point (84) makes the passage of lubricant possible from the device which delivers lubricant to the coupling device (26), and blocks the passage from the coupling device (26) to the device which delivers lubricant.

14. Hydrodynamic retarder (2) having a stator (4) and a rotor (6) which is connected fixedly to a rotor shaft (8) so as to rotate with it and forms a common operating space (24) with the stator (4), and having a coupling device (26) for connecting the rotor shaft (8) to a hydraulic pump (62) which delivers an operating fluid into the operating space (24), **characterized in that** the coupling device (26) is arranged radially within the rotor shaft (8).

15. Drive train having a hydrodynamic retarder (2) with the features of Claim 14.

## Revendications

1. Dispositif d'accouplement (26) pour un retardateur hydrodynamique (2) pour le raccordement d'un arbre de rotor (8) du retardateur hydrodynamique (2) à une pompe hydraulique (62) qui refoule du fluide de travail dans un espace de travail (24) formé par un rotor (6) raccordé de manière solidaire en rotation à l'arbre de rotor (8) conjointement avec un stator (4), **caractérisé en ce que** le dispositif d'accouplement (26) est disposé radialement à l'intérieur de l'arbre de rotor (8).

2. Dispositif d'accouplement (26) selon la revendication 1, **caractérisé en ce que** le dispositif d'accouplement (26) est disposé axialement entre une denture (18) entraînant l'arbre de rotor (8) et la pompe hydraulique (62).

3. Dispositif d'accouplement (26) selon la revendication 1, **caractérisé en ce que** le dispositif d'accouplement (26) présente un accouplement à cône.

4. Dispositif d'accouplement (26) selon la revendication 3, **caractérisé en ce que** le dispositif d'accouplement à cône présent un double cône.

5. Dispositif d'accouplement selon l'une quelconque des revendications 3 ou 4, **caractérisé en ce que** l'accouplement à cône présente une garniture de friction ou un revêtement de friction qui est notamment réalisé en carbone.

6. Dispositif d'accouplement (26) selon la revendication 1, **caractérisé en ce que** la pompe hydraulique (62) est raccordée au dispositif d'accouplement (26) par le biais d'un arbre d'entraînement (56) disposé à l'intérieur de l'arbre de rotor (8).

7. Dispositif d'accouplement (26) selon la revendication 1, **caractérisé en ce que** le dispositif d'accouplement (26) est prévu dans une ouverture au niveau d'une extrémité de l'arbre de rotor (8) qui est fermée par un couvercle amovible (28).

8. Dispositif d'accouplement (26) selon la revendication 7, **caractérisé en ce que** le couvercle amovible (28) coopère hermétiquement avec un adaptateur (78) pour le transfert séparé de fluide de commande et de lubrifiant pour le dispositif d'accouplement (26).

9. Dispositif d'accouplement (26) selon la revendication 6, **caractérisé en ce que** l'arbre d'entraînement (56) disposé à l'intérieur de l'arbre de rotor (8) présente un dispositif d'entraînement (48) disposé de manière solidaire en rotation, qui présente au moins une première surface (50) de forme conique et située radialement à l'extérieur qui coopère avec une surface (52) de forme conique et située radialement à l'intérieur de l'arbre de rotor (8).

10. Dispositif d'accouplement (26) selon la revendication 1, **caractérisé en ce que** le dispositif d'accouplement (26) présente un piston (34) qui présente dans des parties de sa surface (44) une configuration de forme conique.

11. Dispositif d'accouplement (26) selon la revendication 10, **caractérisé en ce que** la surface (44) du piston (34) réalisée sous forme conique est située radialement à l'extérieur et coopère avec une deuxième surface (46) du dispositif d'entraînement (48) de forme conique et située radialement à l'intérieur.

12. Dispositif d'accouplement (26) selon la revendication 1, **caractérisé en ce que** des moyens élastiques (72, 74) sont prévus, lesquels agissent dans le sens d'un desserrage d'éléments (44, 46, 50, 52) du dispositif d'accouplement (26) venant en contact les uns avec les autres.

13. Dispositif d'accouplement (26) selon la revendication 1, **caractérisé en ce qu'**entre le dispositif d'accouplement (26) et un dispositif fournissant du lubrifiant pour le dispositif d'accouplement (26) est prévu un point de transfert de lubrifiant (84) qui permet le transfert de lubrifiant du dispositif fournissant du lubrifiant au dispositif d'accouplement (26) et qui bloque le transfert du dispositif d'accouplement (26) au dispositif fournissant du lubrifiant.

14. Retardateur hydrodynamique (2) comprenant un stator (4) et un rotor (6) raccordé de manière solidaire en rotation à un arbre de rotor (8), qui forme avec le stator (4) un espace de travail commun (24) et comprenant un dispositif d'accouplement (26) pour le raccordement de l'arbre de rotor (8) à une pompe hydraulique (62) refoulant un fluide de travail dans l'espace de travail (24), **caractérisé en ce que** le dispositif d'accouplement (26) est disposé radialement à l'intérieur de l'arbre de rotor (8).

15. Chaîne cinématique comprenant un retardateur hydrodynamique (2) ayant les caractéristiques de la revendication 14.
